# EUROPÄISCHE PATENTSCHRIFT

(11) **EP 3 170 545 B1**
(45) Veröffentlichungstag und Bekanntmachung des Hinweises auf die Patenterteilung: **25.12.2019**
(21) Anmeldenummer: 15405074.4
(22) Anmeldetag: 23.11.2015
(51) Int. Cl.: B01D 46/00, B01D 46/24

(54) **FILTERSYSTEM FÜR EIN VON EINEM GASSTROM DURCHFLOSSENES CONTAINMENT**
FILTER SYSTEM FOR A CONTAINMENT PASSED THROUGH BY A GAS STREAM
SYSTEME DE FILTRE POUR UNE ENCEINTE DE CONFINEMENT TRAVERSEE PAR UN FLUX DE GAZ

(43) Veröffentlichungstag der Anmeldung: 24.05.2017
(73) Patentinhaber: SKAN AG, 4123 Allschwil (CH)
(72) Erfinder: Jehle, Thomas, D-79618 Rheinfelden (DE); Sigwarth, Volker, CH-4334 Sisseln (CH)
(74) Vertreter: Ullrich, Gerhard

(56) Entgegenhaltungen:
- EP-A1- 2 666 532
- WO-A1-2010/088782
- DE-A1- 19 620 252

## Beschreibung

### Anwendungsgebiet der Erfindung

Die Erfindung betrifft ein Filtersystem für ein von einem Gasstrom durchflossenes Containment mit zumindest einer Filtereinheit. An der Filtereinheit sind erste Andockmittel vorhanden, die zum lösbaren Anschluss der Filtereinheit an einem Aufnahmeport des Containments bestimmt sind. Ferner weist die Filtereinheit ein mittels einer Stellmechanik verstellbares Verschlusselement auf, das zum Absperren und Öffnen eines Eintritts in die Filtereinheit dient. Als Containments gelten insbesondere Isolatoren, z.B. für die pharmazeutisch-chemische Industrie, Schleusen und Sicherheitswerkbänke, z.B. für mikrobiologische Arbeiten oder Arbeiten mit toxischen Stoffen. Der Begriff umfasst ferner alle Typen von RABS (Restricted Access Barrier System).

### Stand der Technik

Aus der WO 2010/088 782 A1 ist eine Vorrichtung mit einer kartuschenförmigen, auswechselbaren Filtereinheit zum lösbaren, verriegelten Andocken an einem von einem Gasstrom durchflossenen Containment bekannt. Hierzu sind an der Filtereinheit und am Zugang in das Containment zueinander komplementäre Rastorgane angeordnet. Die Filtereinheit hat einen Deckel, der mittels eines integrierten, axial durch die Filtereinheit sich erstreckenden Mechanismus zwischen einer geschlossenen und einer maximal offenen Position einstellbar ist. Der Mechanismus hat ein ausserhalb des Filtereinsatzes positioniertes Endstück, welches zum Generieren einer Schubbewegung des Mechanismus dient und mit einem anzusetzenden Werkzeug oder per Hand drehend betätigt wird. Der Mechanismus besteht ferner aus einer Gewindespindel, die sich zentrisch vom Deckel erstreckt, und einer die Spindel aufnehmenden Hülse. maliges Öffnen des Systems.

Gegenstand der EP 2 666 532 A1 ist eine Filtereinheit zum Einsetzen in den Rückluft- oder Abluftkanal eines Barrieresystems. Zur Verbindung der Filtereinheit mit dem Barrieresystem ist ein Filterverschluss vorgesehen, an den sich ein Filter anschliesst. Der Filterverschluss weist zumindest einen Filterflansch mit zumindest einer Öffnung auf. Zumindest ein Deckel dient zur Freigabe und Schliessen der Öffnung. Zum Bewegen des Deckels hat die Filtereinheit innerlich zumindest eine Kolbenaufnahme und einen hierzu relativ bewegbaren Kolben, der in der Kolbenaufnahme beweglich gelagert ist. Alternativen bilden die elektrisch oder elektromagnetisch betätigbare Verstellung von Kolben und Kolbenführung sowie die Übersetzung einer Dreh- in eine Hubbewegung, wobei Kolben und Kolbenführung über ein Gewindeprinzip miteinander in Verbindung stehen, so dass bei Drehung am Deckel sich dieser axial verstellt.

### Aufgabe der Erfindung

In Relation zum vorbekannten Stand der Technik liegt der Erfindung die Aufgabe zugrunde, Handling und Betrieb von an Containments installierten Filtereinheiten effizienter zu gestalten, so dass sich deren Austausch und Betätigung kontaminationssicher, zeitsparend und präzise im Prozess geführt, bewerkstelligen lassen. Eine weitere Aufgabe der Erfindung besteht darin, insbesondere bei einer Vielzahl an einem Containment installierter Filtersysteme, das Schalten und Überwachen der Stellung aller Verschlusselemente zu automatisieren.

### Übersicht über die Erfindung

Das Filtersystem ist für ein von einem Gasstrom durchflossenes Containment mit zumindest einer Filtereinheit konzipiert. Die Filtereinheit besitzt erste Andockmittel, welche zum lösbaren Anschluss der Filtereinheit an einem Aufnahmeport des Containments nutzbar sind. Ferner hat die Filtereinheit ein mittels einer Stellmechanik verstellbares Verschlusselement, das zum Absperren und Öffnen eines Eintritts in die Filtereinheit bestimmt ist. Zur Betätigung der Stellmechanik ist eine damit verbindbare Antriebseinheit vorgesehen, die einen Elektromotor zum Antrieb eines drehbar gelagerten Transmissionsteils und eine mit dem Transmissionsteil verbundene Adapterbaugruppe zur Verbindung mit der Stellmechanik umfasst. Der Elektromotor hat ein Treibrad. Das Transmissionsteil ist als ein vom Treibrad angetriebenes Rad ausgebildet. Das Übersetzungsverhältnis vom Treibrad des Elektromotors zum Transmissionsteil ist grösser als 1:20, vorzugsweise grösser als 1:30, z.B. 1:33 dimensioniert. Die Adapterbaugruppe weist einen Mitnehmer auf, der mit dem Transmissionsteil Drehverbindung hat und zum Eingriff mit der Stellmechanik bestimmt ist.

Nachfolgend werden spezielle Ausführungsformen der Erfindung definiert: Das Treibrad ist ein Ritzel mit einer radial umlaufenden Verzahnung. Das Transmissionsteil hat eine radial umlaufende Verzahnung, welche mit der Verzahnung des Treibrades in Eingriff ist.

Die Stellmechanik der Filtereinheit hat einerseits ein an einer Spindelhülse sitzendes Schlussstück mit einer nicht-kreisrunden Kontur, wobei das Schlussstück z.B. eine Mutter mit einem Aussenvielkant ist. Der Mitnehmer der Adapterbaugruppe besitzt eine komplementäre Geometrie zum Formschluss mit der Kontur des Schlussstücks, wobei der Mitnehmer z.B. ein den Aussenvielkant umgreifender Innenvielkant ist.

Die Adapterbaugruppe umfasst ferner:
a) zur Verbindung der Stellmechanik mit der Antriebseinheit Verbindungsmittel, die an der Antriebseinheit vorgesehen und komplementär zu an der Filtereinheit angeordneten zweiten Andockmitteln ausgebildet sind; und
b) einen feststehenden Flansch als tragende Basis für den Mitnehmer und einen Halter zur Befestigung des Elektromotors.

Die Verbindungsmittel sind aufseiten der Antriebseinheit am Flansch angeordnet und haben die Gestalt von Nuten mit Hinterschnitt. Die zweiten Andockmittel an der Filtereinheit besitzen die Gestalt von Rastnasen. Die zweiten Andockmittel bilden mit den zusammengefügten Verbindungsmitteln eine arretierte Endstellung. Der Flansch hat hervorstehende Federelemente, welche erst im eingedrückten Zustand das Lösen der Verbindungsmittel von den zweiten Andockmitteln aus der arretierten Endstellung ermöglichen.

Die Stellmechanik der Filtereinheit erstreckt sich axial durch diese und setzt sich zusammen aus:
a) einem Spindelstab, welcher mit einem Ende am tellerförmigen Verschlusselement fixiert ist und dessen anderes Ende als Gewindeabschnitt, vorzugsweise mit Aussengewinde, ausgebildet ist;
b) der Spindelhülse, vorzugsweise mit Innengewinde, welche mit dem Gewindeabschnitt in Eingriff ist; und
c) dem an der Spindelhülse sitzenden Schlussstück.

Die Filtereinheit ist im Prinzip zylindrisch und setzt sich zusammen aus:
a) einem Filtereinsatz von hohlzylindrischer Gestalt mit einem hohlen Innenraum und beidseits je einer Stirnfläche;
b) einem Mantel, der den Filtereinsatz an seinem Aussenumfang umhüllt;
c) einer erster Seitenabdeckung, welche einer der Stirnflächen zugeordnet ist und den zentrischen Eintritt umrandet;
d) dem Verschlusselement mit der daran fixierten und sich axial durch den Innenraum erstreckenden Stellmechanik; und
e) einer zweiten Seitenabdeckung, welche der anderen Stirnfläche zugeordnet ist, einen zum Innenraum gewölbten zentrischen Boden hat, wodurch sich eine nach aussen mündende Vertiefung ergibt, in die von der Stellmechanik das Schlussstück hineinragt.

Die ersten Andockmittel sind an der ersten Seitenabdeckung, am Rand des Eintritts, angeordnet. Die zweiten Andockmittel sind an der zweiten Seitenabdeckung, in die Vertiefung ragend, angeordnet. Der Aufnahmeport besitzt einen Zugang in das Containment, und am Rand des Zugangs sind Anschlussorgane zum Eingriff mit den ersten Andockmitteln vorhanden.

Eine Steuereinheit ist vorgesehen, welche dazu dient:
a) An- und Abschaltzeiten, Aktivierungsdauer, Drehrichtung und Drehgeschwindigkeit des Elektromotors der Antriebseinheit und damit indirekt die Stellung des Verschlusselements programmmässig zu schalten und optional auch zu protokollieren;
b) die Bewegung des Verschlusselements in den Endstellungen bei maximaler Öffnung und bei ordnungsgemässer Absperrung des Eintritts in die Filtereinheit zu begrenzen; und
c) die jeweils momentane Stellung des Verschlusselements anzuzeigen und optional auch zu protokollieren.

Eine Vielzahl von Filtersystemen, jeweils aus einer Filtereinheit und einer damit verbundenen Antriebseinheit bestehend, ist an einem Containment angebracht. Hierbei ist die Steuereinheit für die Funktion jedes Filtersystems innerhalb der Gesamtheit aller Filtersysteme individuell programmierbar. Die Stellmechanik lässt sich alternativ zur mit der Filtereinheit verbindbaren Antriebseinheit auch manuell betätigen. Dies mittels eines am Schlussstück angesetzten Werkzeugs oder direkt von Hand.

Die markantesten Vorteile des erfindungsgemässen Filtersystems sind die lösbaren Kopplungen der Filtereinheit am Containment und der Antriebseinheit an der Filtereinheit, die motorische Betätigung der Stellmechanik der Filtereinheit bei quasi unendlicher Wiederverwendbarkeit der Antriebseinheit, die geringe Baugrösse des eingesetzten Motors, die mögliche Vervollkommnung mit einer Steuereinheit zur Schaltung und Überwachung einer oder besonders mehrerer Filtereinheiten und schliesslich das alternative manuelle Einstellen der Position des Verschlusselements an der Filtereinheit.

### Kurzbeschreibung der beigefügten Zeichnungen

Es zeigen:

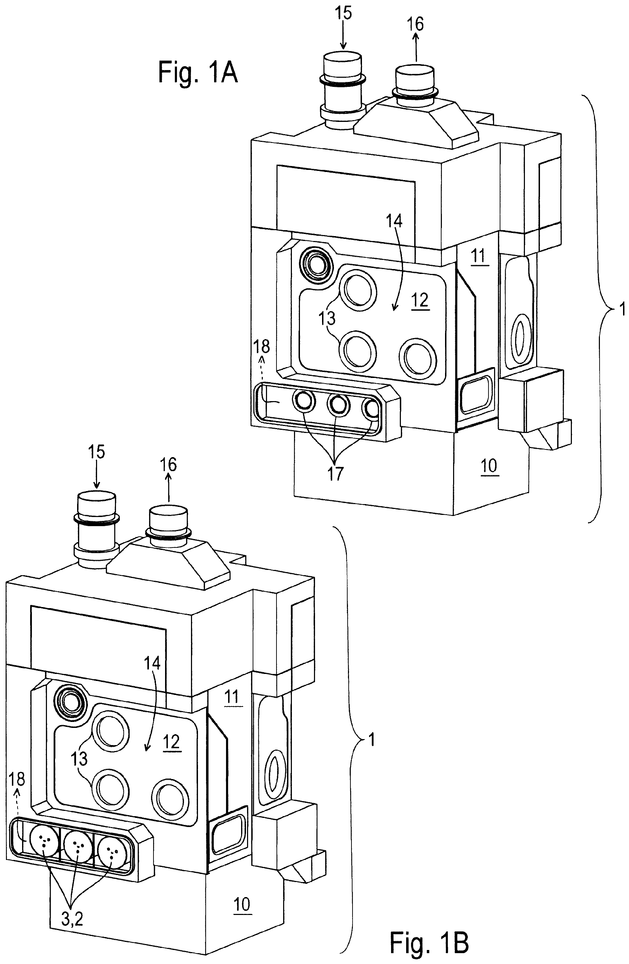

Figur 1A - Ein Containment, beispielhaft in Gestalt eines Isolators, momentan ohne Filtereinheiten an den unbestückten Aufnahmeports, in Prinzipdarstellung;
Figur 1B - das Containment gemäss Figur 1A, bestückt mit Filtereinheiten an den Aufnahmeports, in Prinzipdarstellung;
Figur 2A - einen separaten Aufnahmeport aus Figur 1A, in Perspektivdarstellung;
Figur 2B - das vergrösserte Detail X1 aus Figur 2A;
Figur 3A - eine Filtereinheit mit Blick auf die erste Seitenabdeckung und mit geschlossenem Verschlusselement, in Perspektivdarstellung;
Figur 3B - die Filtereinheit gemäss Figur 1A, mit geschlossenem Verschlusselement, im Vertikalschnitt, als Prinzipdarstellung;
Figur 3C - die Filtereinheit gemäss Figur 1A, nun mit Blick auf die zweite Seitenabdeckung, in Perspektivdarstellung;
Figur 4A - die Filtereinheit gemäss Figur 1A, mit Blick auf die erste Seitenabdeckung und mit offenem Verschlusselement, in Perspektivdarstellung;
Figur 4B - die Filtereinheit gemäss Figur 1A, mit offenem Verschlusselement, im Vertikalschnitt, in Prinzipdarstellung;

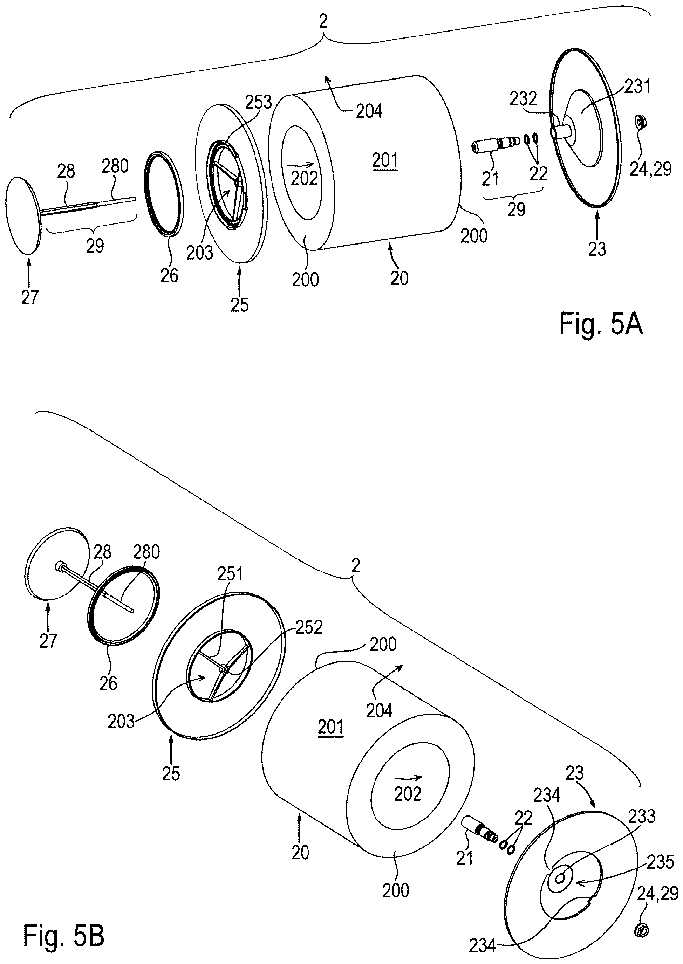

Figur 5A - die Filtereinheit gemäss Figur 1A, in perspektivischer Explosionsdarstellung;
Figur 5B - die Anordnung gemäss Figur 5A, in gewechselter Perspektive;
Figur 6A - eine separate Antriebseinheit aus Figur 1B, in Perspektivdarstellung;
Figur 6B - die Antriebseinheit gemäss Figur 6A, in gewechselter Perspektive;
Figur 6C - die Antriebseinheit gemäss Figur 6A, in Seitenansicht
Figur 6D - die Antriebseinheit gemäss Figur 6A, in perspektivischer Explosionsdarstellung;
Figur 6E - die Anordnung gemäss Figur 6D, in gewechselter Perspektive;
Figur 7A - die Filtereinheit gemäss Figur 3B, mit angenäherter Antriebseinheit gemäss Figur 6A, in Perspektivdarstellung;
Figur 7B - die Anordnung gemäss Figur 7A, in gewechselter Perspektive;
Figur 7C - die Anordnung gemäss Figur 7A, zusammengebaut, in Perspektivdarstellung;
Figur 7D - den Zusammenbau gemäss Figur 7C, in Seitenansicht;
Figur 7E - den Zusammenbau gemäss Figur 7D, im gespiegelten Vertikalschnitt, in Prinzipdarstellung;
Figuren 8A bis 8E - das phasenweise Andocken der Antriebseinheit gemäss Figur 6B an die Filtereinheit gemäss Figur 3C, in Prinzipdarstellungen;

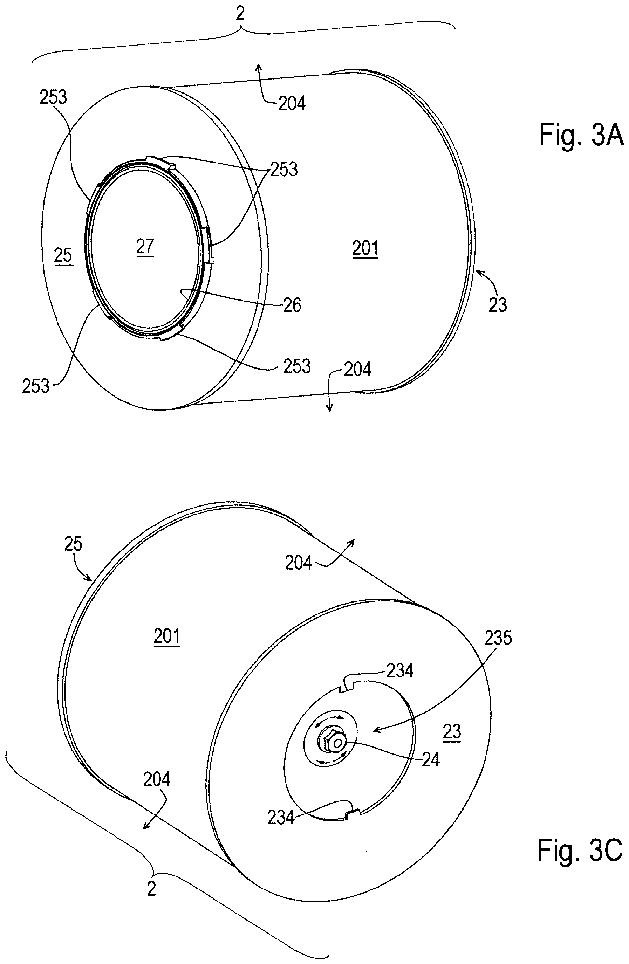

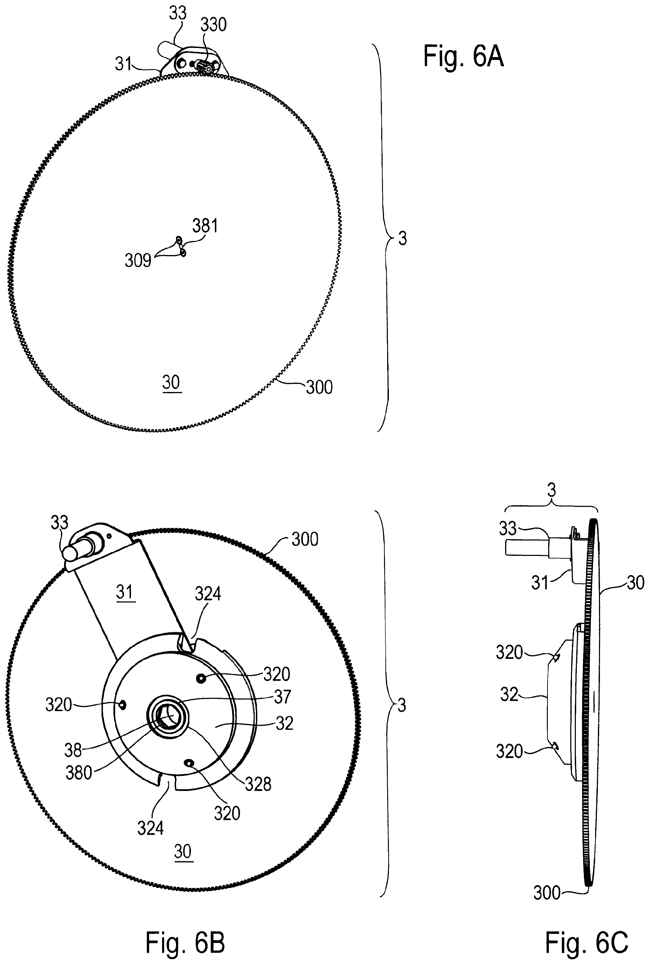

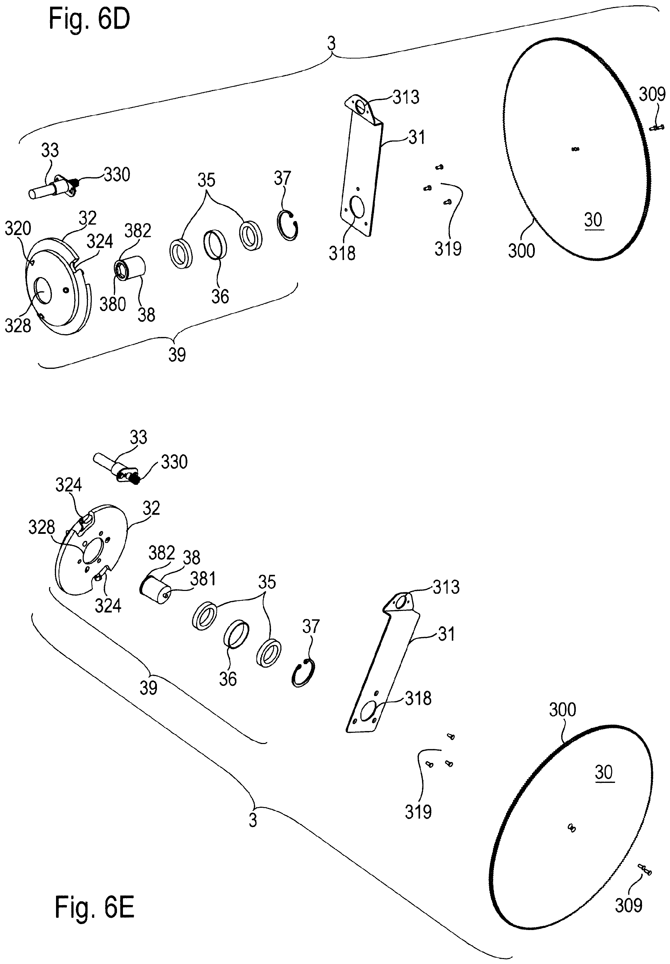

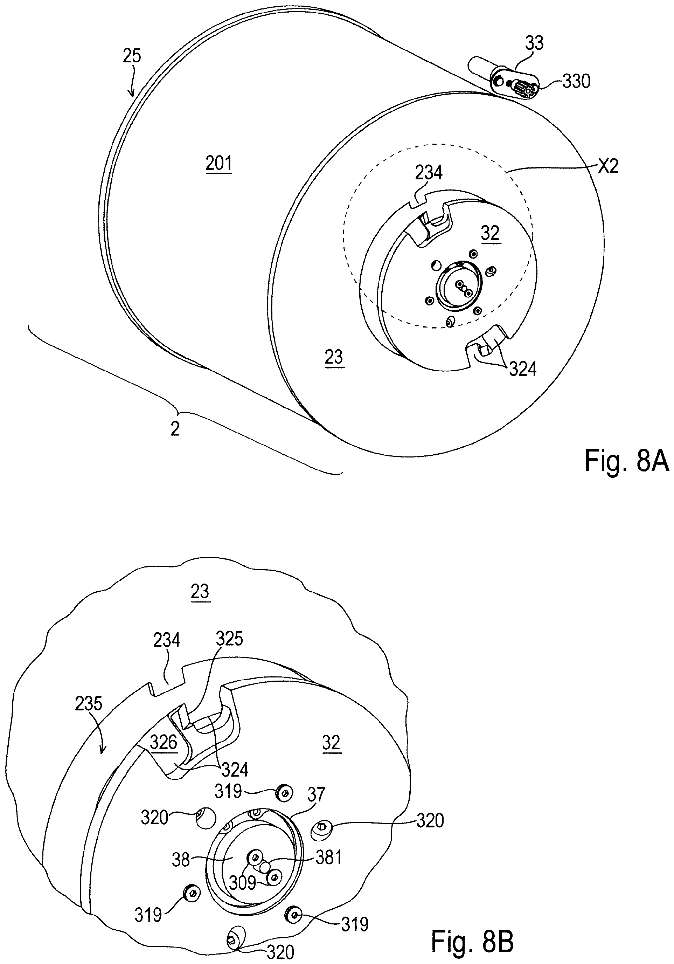

Figur 8A - Erste Phase: Annäherung der Verbindungsmittel des Flanschs der Antriebseinheit gemäss Figur 6B an die zweiten Andockmittel der Filtereinheit gemäss Figur 3C;
Figur 8B - das vergrösserte Detail X2 aus Figur 8A;

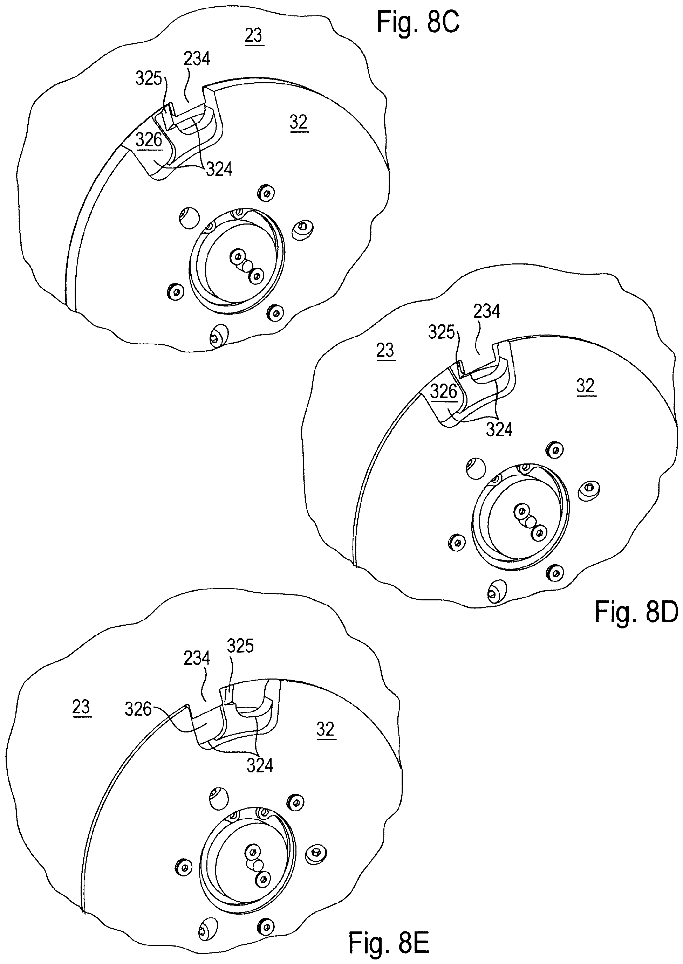

Figur 8C - Zweite Phase: Aufschieben der Verbindungsmittel des Flanschs der
Antriebseinheit auf die zweiten Andockmittel der Filtereinheit;
Figur 8D - Dritte Phase: Eindrehen der Verbindungsmittel des Flanschs der Antriebseinheit auf die zweiten Andockmittel der Filtereinheit; und
Figur 8E - Vierte Phase: Antriebseinheit an Filtereinheit angedockt, arretierte Endstellung.

### Ausführungsbeispiel

Mit Bezug auf die beiliegenden Zeichnungen erfolgt nachstehend die detaillierte Beschreibung des erfindungsgemässen Filtersystems für das oben definierte Anwendungsgebiet. Hierbei wird aufseiten des Containments begonnen, anschliessend jeweils eine einzelne Filtereinheit und Antriebseinheit behandelt und schliesslich das Zusammenwirken beider Vorrichtungen betrachtet.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A bis 2B

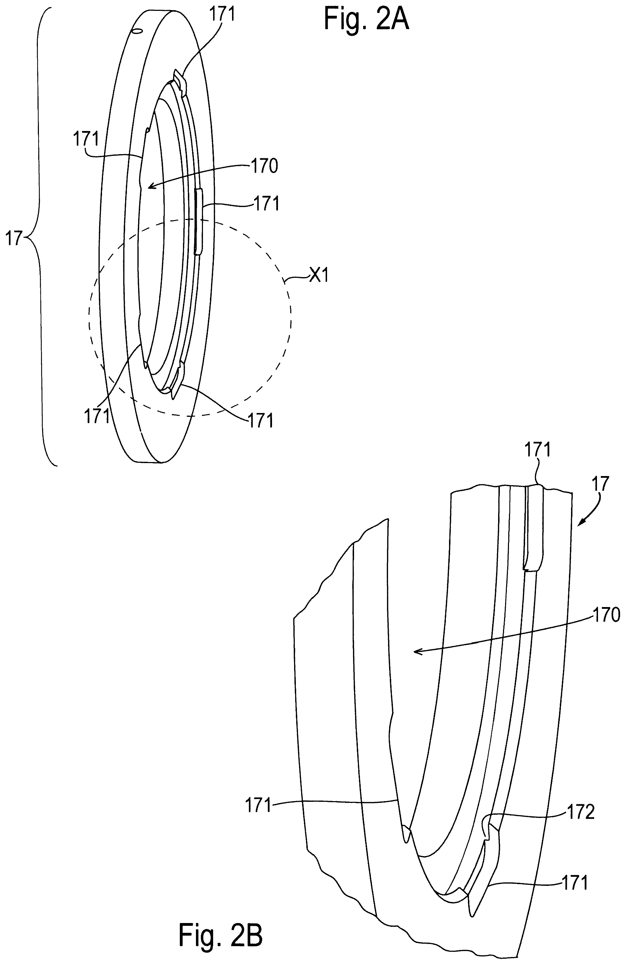

Die beispielhaft illustrierte Ausführungsform eines Containments **1** besteht typischerweise zunächst aus dem Untergestell **10** und dem darauf ruhenden Gehäuse **11.** Frontseitig ist eine Scheibe **12** mit zumeist mehreren Handeingriffen **13** installiert, um Einsicht und Zugriff in die innen gelegene Arbeitskammer **14** zu ermöglichen. Im Dachraum des Containments **1** sind die Zulufteinheit **15** und die Ablufteinheit **16** angeordnet, wobei je nach Anlagenausstattung sich die Zulufteinheit **15** aus der freien Atmosphäre oder dem Aufstellraum speisen kann und die Ablufteinheit **16** dorthin führt. Jeder Aufnahmeport **17** umrandet einen Zugang **170** in die Arbeitskammer **14** des Containments **1** und besitzt zirkulär um den Zugang **170** systematisch verteilte Anschlussorgane **171,** hier in Gestalt von Nuten mit bajonettartigem Hinterschnitt **172** (s. Figuren 2A und 2B).

### Figur 1A

In der dargestellten Version hat das Containment **1** drei Aufnahmeports **17,** welche einerseits in die Arbeitskammer **14** münden, andererseits zum Umluftkanal **18** weisen und zunächst noch unbestückt sind. Zwecks Einblick auf die Aufnahmeports **17** ist der Umluftkanal **18** momentan offen dargestellt.

### Figur 1B

An die Aufnahmeports **17** ist jeweils eine Filtereinheit **2** angedockt, die ihrerseits jeweils mit einer Antriebseinheit **3** versehen ist. Der Umluftkanal **18** ist weiterhin nur für die freie Einsicht nach vorn offen dargestellt. Im Betrieb des Containments **1** muss der Umluftkanal **18** nach aussen verschlossen bleiben und wird nur beim Wechsel der Filtereinheiten **2** nach entsprechenden Verfahrensschritten geöffnet.

### Figuren 3A bis 5B

Die kartuschenförmige Filtereinheit **2,** betrachtet im Figurenpaar 5A und 5B von links nach rechts, umfasst:
- das tellerförmige Verschlusselement **27;**
- den zu einer Stellmechanik **29** gehörenden Spindelstab **28** mit dem an dessen freien Ende ausgebildeten Aussengewindeabschnitt **280,** wobei das andere Ende des Spindelstabs **28** zentrisch an der Innenseite des Verschlusselements **27** befestigt ist und sich in die Filtereinheit **2** hinein erstreckt;
- den zweiten Dichtungsring **26;**
- die erste Seitenabdeckung **25,** welche quasi die Form eines Kreisrings hat und den Eintritt **203** umrandet, in dem ein speichenartiges Gerüst **251** mit dem zentrischen Lager **252** angeordnet ist, und wobei am Aussenumfang des Eintritts **203** die systematisch verteilten ersten Andockmittel **253** angeordnet sind, hier in Gestalt von Raststegen;
- den Filtereinsatz **20** in Gestalt eines Hohlzylinders mit den beiderseitigen Stirnflächen **200,** dem radial umgebenden Mantel **201** als Austritt **204** und dem Innenraum **202;**
- die ebenfalls zur Stellmechanik **29** gehörende Spindelhülse **21,** die ein Innengewinde besitzt und für die zwei erste Dichtungsringe **22** vorgesehen sind;
- die zweite tellerförmige Seitenabdeckung **23,** an deren Innenseite der sich zur Filtereinheit **2** zentrisch gewölbte Boden **231** mit dem daran ansetzenden Hülsenstück **232** vorhanden ist, wobei an der Aussenseite komplementär zur Grundfläche des Bodens **231** eine trichterartige Vertiefung **235** existiert, an deren Rand die zweiten Andockmittel **234** - hier in Gestalt von Rastnasen - angeordnet sind und deren Grund das Durchgangsloch **233** hat; und
- das Schlussstück **24,** hier in Gestalt einer Mutter mit Aussensechskant.

### Filtereinheit 2 im zusammengebauten Zustand (s.Figuren 3A bis 4B)

Es ergibt sich folgender Aufbau:
- Die erste Seitenabdeckung **25** ist an eine der beiden Stirnflächen **200** des Filtereinsatzes **20** und die zweite Seitenabdeckung **23** an die gegenüberliegende Stirnfläche **200** angefügt.
- Der zweite Dichtungsring **26** ist am Rand des Eintritts **203** fixiert.
- Die Stellmechanik **29** erstreckt sich axial durch den Innenraum **202** des Filtereinsatzes **20** und die gesamte Filtereinheit **2,** wobei der Spindelstab **28** axial verschiebbar und radial fixiert das Lager **252** durchragt, der Gewindeabschnitt **280** des Spindelstabs **28** mit dem Innengwinde der Spindelhülse **21** in Eingriff ist, die ersten Dichtungsringe **22** auf der Spindelhülse **21** sitzen, welche drehbar im Hülsenstück **232** steckt, und das Schlussstück **24** auf dem aus dem Loch **233** herausragenden Ende der Spindelhülse **21** drehfest und versenkt in der Vertiefung **235** sitzt.

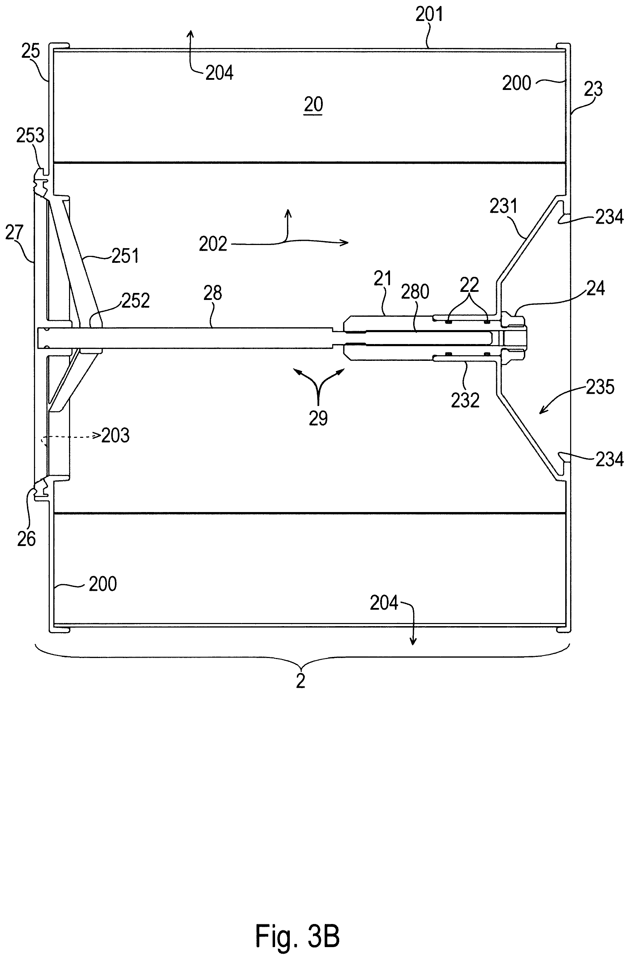

### Abgesperrter Eintritt 203 in die Filtereinheit 2 (s. Figuren 3A und 3B)

Bei völlig abgesperrtem Eintritt **203** sind das Verschlusselement **27** gasdicht an den zweiten Dichtungsring **26** angepresst und der Gewindeabschnitt **280** des Spindelstabs **28** maximal in die Spindelhülse **21** hineingezogen. In diesem Zustand kann kein Gasstrom in die Filtereinheit **2** gelangen. Bei der Lagerhaltung von Filtereinheiten **2,** bei ihrer Dekontamination, d.h. der Aussenflächen der Verschlusselemente **27** während der Installation am Containment **1,** und bei Wechsel zwecks Entsorgung verbrauchter Filtereinheiten **2** ist der Eintritt **203** abgesperrt.

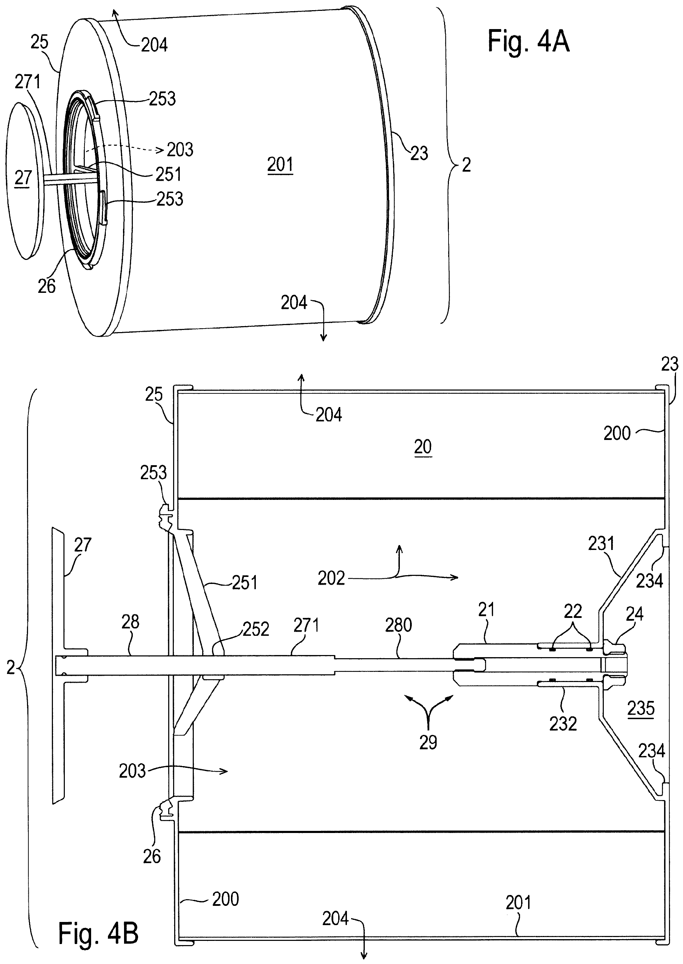

### Offener Eintritt 203 in die Filtereinheit 2 (s.Figuren 4A und 4B)

Zum Herstellen eines offenen Eintritts **203** wurde am Schlussstück **24** gedreht, damit die Stellmechanik **29** betätigt, und das Verschlusselement **27** ist nun vom zweiten Dichtungsring **26** abgehoben. Bei maximaler Öffnung des Eintritts **203** hat der Gewindeabschnitt **280** des Spindelstabs **28** nur mehr seinen minimalen Eingriff in der Spindelhülse **21.** Je nach Ausmass der Offenstellung des Eintritts **203** - zwischen geringfügiger und maximaler Öffnung des Verschlusselements **27** - strömt eine adäquate Menge an zu reinigendem Gasstrom aus der Arbeitskammer **14** des im Betriebszustand befindlichen Containments **1** in die daran installierte Filtereinheit **2,** verlässt selbige gereinigt über den Austritt **204** und fliesst in den Umluftkanal **18.**

### Figuren 6A bis 6E

Die Antriebseinheit **3,** betrachtet im Figurenpaar 6D und 6E von rechts nach links, umfasst:
- erste Schrauben **309;**
- das radförmige Transmissionsteil **30** mit der radial umlaufenden Verzahnung **300;**
- zweite Schrauben **319;**
- einen laschenförmigen, abgekanteten Halter **31** mit der oberen und unteren Öffnung **313,318;**
- die Adapterbaugruppe **39,** bestehend aus einem Sicherungselement **37** in Gestalt eines Sprengrings, zwei Lagern **35,** dazwischen einem Distanzring **36,** ferner einem Mitnehmer **38** mit der Innenkontur **380** und dem axialen Zapfen **381** und schliesslich einem Flansch **32,** der ein zentrisches Durchgangsloch **3,28,** radial angeordnete Verbindungsmittel **324** in Gestalt hinterschnittener Nuten und mehrere aus der Aussenfläche des Flanschs **32** herausragende Federelemente **320** hat; und
- einen Motor **33,** vorzugsweise als Elektromotor, mit einem Treibrad **330** in Gestalt eines verzahnten Ritzels.

### Antriebseinheit 3 im zusammengebauten Zustand (s. Figuren 6A bis 6C)

Es ergibt sich folgender Aufbau:
- Auf den zylindrischen Mitnehmer **38** sind gegen seinen Bund **382** das erste der zwei Lager **35,** dann der Distanzring **36,** dann das zweite der Lager **35** und abschliessend das Sicherungselement **37** aufgeschoben. Diese Anordnung steckt axial mittels des Bunds **382** und des Sicherungselements **37** arretiert drehbar im Durchgangsloch **328.**
- Der Halter **31** steckt mit seiner unteren Öffnung **318** auf dem Mitnehmer **38** und ist mittels der zweiten Schrauben **319** am Flansch **32** befestigt.
- In der oberen Öffnung **313** des Halters **31** ist der Motor **33** befestigt.
- Das Transmissionsteil **30** ist mittels der ersten Schrauben **309** an der zugewandten Stirnfläche des Mitnehmers **38** fixiert, und sein Zapfen **381** steckt als Zentrierung im Transmissionsteil **30.**
- Die Verzahnung des Treibrads **330** des Motors **33** ist mit der Verzahnung **300** des Transmissionsteils **30** in Eingriff. Das Übersetzungsverhältnis zwischen dem Treibrad **330** und dem Transmissionsteil **30** ist grösser als 1:20, vorzugsweise grösser als 1:30, z.B. 1:33 dimensioniert.
- Bei Aktivierung des Motors **33** - wahlweise links- oder rechtsdrehend - überträgt dessen Treibrad **330** seine Rotation auf das Transmissionsteil **30** und versetzt den Mitnehmer **38** in äquivalente Drehung.

### Figuren 7A bis 8E

Diese Figurenfolge illustriert den phasenweisen Zusammenbau und das funktionale Zusammenwirken von Filtereinheit **2** und Antriebseinheit **3.** Für den bevorzugten Installationsablauf wird angenommen, dass die Filtereinheit **2** an einem Aufnahmeport **17** bereits angedockt ist und somit die ersten Andockmittel **253** der Filtereinheit **2** in den Anschlussorganen **171** und deren Hinterschnitten **172** form- und kraftschlüssig arretiert sind. Zugänglich verbleibt damit die zweite Seitenabdeckung **23** mit den daran vorhandenen zweiten Andockmitteln **234** und dem in der Vertiefung **235** versenkten Schlussstück **24.**

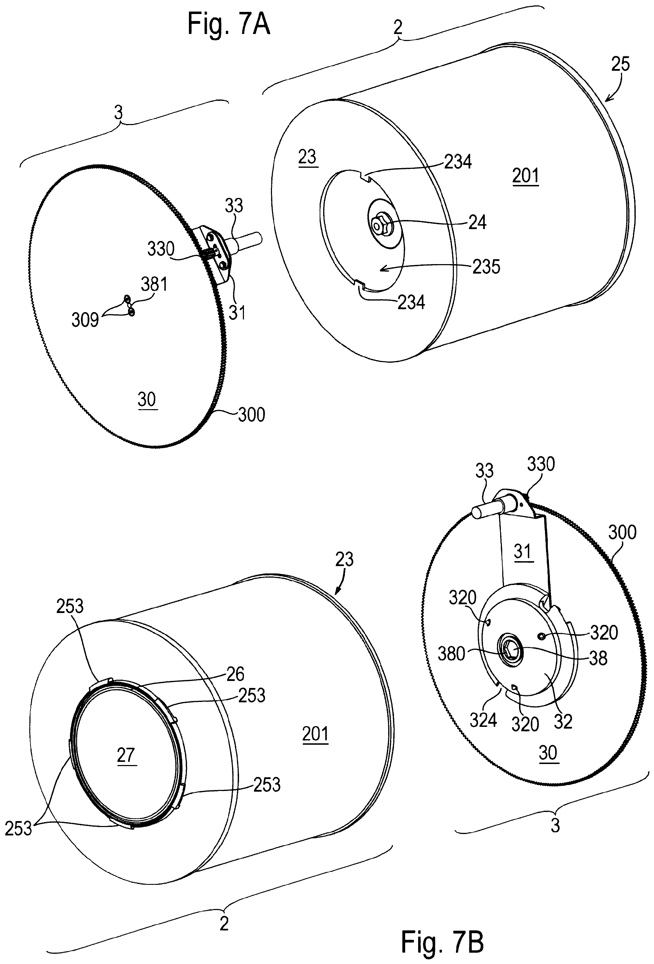

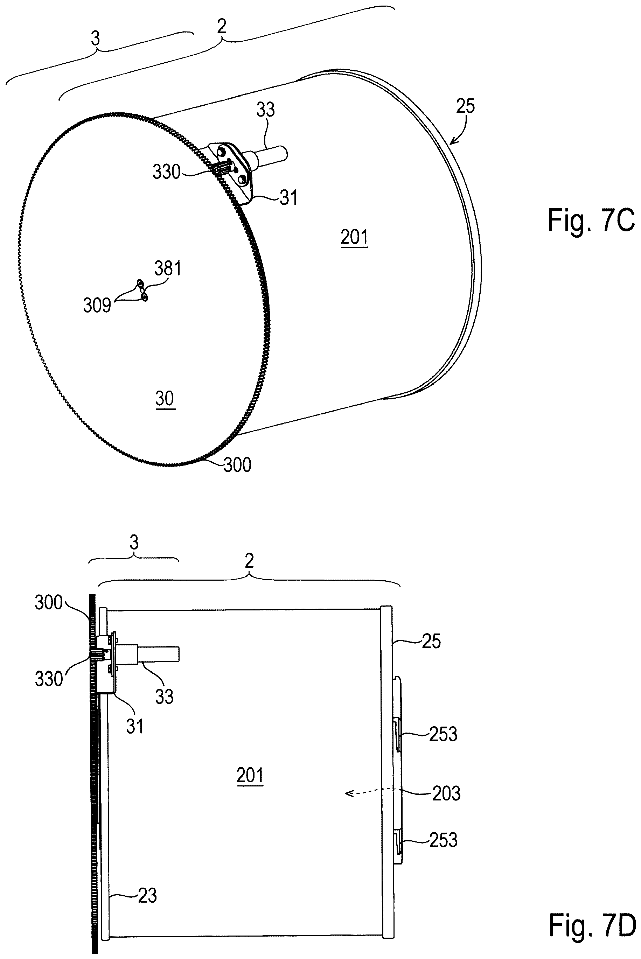

### Erste Phase des Zusammenbaus (s. Figuren 7A, 7B, und 8B)

Um die Antriebseinheit **3** an der zuvor an einem Aufnahmeport **17** des Containments **1** installierten Filtereinheit **2** anzudocken, wird zunächst die Antriebseinheit **3** mit dem Flansch **32** der zweiten Seitenabdeckung **23** zugewandt ausgerichtet bis die Verbindungsmittel **324** vom Flansch **32** mit den zweiten Andockmitteln **234** an der zweiten Seitenabdeckung **23** in einer zueinander kongruenten Position stehen.

### Zweite Phase des Zusammenbaus (s. Figur 8C)

Aus der zuvor angenäherten Position schiebt man die Antriebseinheit **3** weiter an die zweite Seitenabdeckung **23** heran, so dass die zweiten Andockmittel **234** beginnen, in die Verbindungsmittel **324** einzufahren. Hierbei taucht der Flansch **32** in die Vertiefung **235** ein, die aus dem Flansch **32** herausragenden Federelemente **320** setzen in der Vertiefung **235** auf und die Innenkontur **380** des Mitnehmers **38** beginnt das Schlussstück **24** formschlüssig zu umfassen.

### Dritte Phase des Zusammenbaus (s. Figur 8D)

Mit einer Drehbewegung der Antriebseinheit **3** im Uhrzeigersinn gelangen die zweiten Andockmittel **234** auf Schrägen **325** der Verbindungsmittel **324** und überfahren diese sukzessive. Damit wird der Flansch **32** weiter in die Vertiefung **235** gezogen, die Federelemente **320** werden eingedrückt und die Innenkontur **380** gleitet weiter über das Schlussstück **24.**

### Vierte Phase des Zusammenbaus (s. Figur 8E)

Bei weiterer Drehbewegung der Antriebseinheit **3** im Uhrzeigersinn haben die zweiten Andockmittel **234** die Schrägen **325** vollständig überfahren und rasten infolge der sich etwas entspannenden Federelemente **320,** welche die Antriebseinheit **3** von der Filtereinheit **2** begrenzt wegdrücken, in die abgesenkten Mulden **326** ein. Damit ist die Antriebseinheit **3** ordnungsgemäss arretiert an der Filtereinheit **2** angedockt, und die Innenkontur **380** des Mitnehmers **38** übergreift das Schlussstück **24** in betriebssicherer Tiefe.

Um die Antriebseinheit 3 aus der arretierten Verbindung mit der Filtereinheit **2** zu lösen, muss man die Antriebseinheit **3** gegen die Wirkung der aus dem Flansch **32** herausragenden und in der Vertiefung **235** aufsetzenden Federelemente **320** in Richtung Filtereinheit **2** drücken, so dass die Mulden **326** die zweiten Andockmittel **234** freigeben, sich die Antriebseinheit **3** gegen den Uhrzeigersinn drehen lässt, bis man die Verbindungsmittel **324** von den zweiten Andockmitteln **234** entfernen kann.

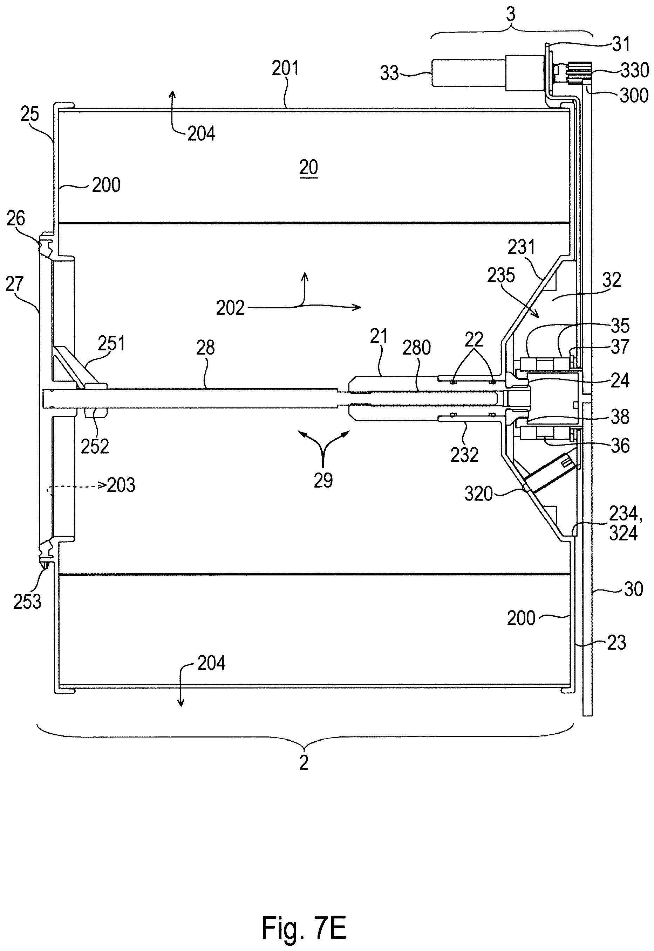

### Zusammenwirken von Filtereinheit 2 und Antriebseinheit 3 (s. Figur 7E)

Bei Aktivierung des **Motors.33** bringt dessen sich somit drehendes Treibrad **330** das Transmissionsteil **30** und den damit starr verbundenen Mitnehmer **38** gemäss gewähltem Übersetzungsverhältnis in äquivalente Rotation. Infolge der formschlüssigen Kopplung zwischen Mitnehmer **38** und Schlussstück **24** wird die Stellmechanik **29** der Filtereinheit **2** in Gang gesetzt; dies abhängig von der am Motor **33** wahlweise geschalteten Drehrichtung. Befindet sich das Verschlusselement **27** in vollständig abgesperrter oder maximal offener Position, erfolgt dessen Verstellung nur in reversibler Richtung oder Endanschläge blockieren ein Überschreiten des Fahrwegs des Verschlusselements **27.** Hat das Verschlusselement **27** hingegen irgendeine Zwischenposition, lässt sich, abhängig vom Schaltbefehl für den Motor **33,** das weitere Ausschieben des Verschlusselements **27** bis zur maximal offenen Position oder dessen weiteres Einziehen bis in die vollständig abgesperrte Position einstellen.

### Vervollkommnung mit einer Steuereinheit

Das erfindungsgemässe Filtersystem lässt sich vorteilhaft mit einer Steuereinheit verbinden, welche dazu nutzbar ist:
a) An- und Abschaltzeiten, Aktivierungsdauer, Drehrichtung und Drehgeschwindigkeit des Motors **33** der Antriebseinheit **3** und damit indirekt die Stellung des Verschlusselements **27** programmmässig zu schalten und optional auch zu protokollieren;
b) die Bewegung des Verschlusselements **27** in den Endstellungen bei maximaler Öffnung und bei ordnungsgemässer Absperrung des Eintritts **203** in die Filtereinheit **2** zu begrenzen;
c) die jeweils momentane Stellung des Verschlusselements **27** anzuzeigen und optional auch zu protokollieren; und
d) bei einer an einem Containment **1** installierten Vielzahl von Filtersystemen, jeweils aus einer Filtereinheit **2** und einer damit verbundenen Antriebseinheit **3** bestehend, die Funktion jedes Filtersystems innerhalb der Gesamtheit aller Filtersysteme individuell programmiert zu steuern.

## Patentansprüche

1. Filtersystem für ein von einem Gasstrom durchflossenes Containment (**1**) mit zumindest einer Filtereinheit (**2**), wobei:
a) die Filtereinheit (**2**) aufweist:
aa) erste Andockmittel (**253**), die zum lösbaren Anschluss der Filtereinheit (**2**) an einem Aufnahmeport (**17**) des Containments (**1**) bestimmt sind; und
ab) ein mittels einer Stellmechanik (**29**) verstellbares Verschlusselement (**27**) zum Absperren und Öffnen eines Eintritts (**203**) in die Filtereinheit (**2**);
b) zur Betätigung der Stellmechanik (**29**) eine mit dieser verbindbare Antriebseinheit (**3**) vorgesehen ist, die einen Elektromotor (**33**) zum Antrieb eines drehbar gelagerten Transmissionsteils (**30**) und eine mit dem Transmissionsteil (**30**) verbundene Adapterbaugruppe (**39**) zur Verbindung mit der Stellmechanik (**29**) umfasst, **dadurch gekennzeichnet, dass**
c) der Elektromotor (**33**) ein Treibrad (**330**) hat;
d) das Transmissionsteil (**30**) als ein vom Treibrad (**330**) angetriebenes Rad ausgebildet ist;
e) das Übersetzungsverhältnis vom Treibrad (**330**) des Elektromotors (**33**) zum Transmissionsteil (**30**) grösser als 1:20, vorzugsweise grösser als 1:30, z.B. 1:33 dimensioniert ist; und
f) die Adapterbaugruppe (**39**) einen Mitnehmer (**38**) aufweist, der mit dem Transmissionsteil (**30**) Drehverbindung hat und zum Eingriff mit der Stellmechanik (**29**) bestimmt ist.

2. Filtersystem nach Anspruch 1, **dadurch gekennzeichnet, dass**
a) das Treibrad (**330**) ein Ritzel mit einer radial umlaufenden Verzahnung ist; und
b) das Transmissionsteil (**30**) eine radial umlaufende Verzahnung (**300**) hat, welche mit der Verzahnung des Treibrades (**330**) in Eingriff ist.

3. Filtersystem nach zumindest einem der Ansprüche 1 oder 2, **dadurch gekennzeichnet, dass**
a) die Stellmechanik (**29**) der Filtereinheit (**2**) einerseits ein an einer Spindelhülse (**21**) sitzendes Schlussstück (**24**) mit einer nicht-kreisrunden Kontur hat, wobei das Schlussstück (**24**) z.B. eine Mutter mit einem Aussenvielkant ist; und
b) der Mitnehmer (**38**) der Adapterbaugruppe (**39**) eine komplementäre Geometrie zum Formschluss mit der Kontur des Schlussstücks (**24**) besitzt, wobei der Mitnehmer (**38**) z.B. ein den Aussenvielkant umgreifender Innenvielkant ist.

4. Filtersystem nach zumindest einem der Ansprüche 1 bis 3, **dadurch gekennzeichnet, dass** die Adapterbaugruppe (**39**) ferner umfasst:
a) zur Verbindung der Stellmechanik (**29**) mit der Antriebseinheit (**3**) Verbindungsmittel (**324**), die an der Antriebseinheit (**3**) vorgesehen und komplementär zu an der Filtereinheit (**2**) angeordneten zweiten Andockmitteln (**234**) ausgebildet sind; und
b) einen feststehenden Flansch (**32**) als tragende Basis für den Mitnehmer (**38**) und einen Halter (**31**) zur Befestigung des Elektromotors (**33**).

5. Filtersystem nach Anspruch 4, **dadurch gekennzeichnet, dass**
a) die Verbindungsmittel (**324**) aufseiten der Antriebseinheit (**3**) am Flansch (**32**) angeordnet sind und die Gestalt von Nuten mit Hinterschnitt haben;
b) die zweiten Andockmittel (**234**) an der Filtereinheit (**2**) die Gestalt von Rastnasen besitzen; und
c) die zweiten Andockmittel (**234**) mit den zusammengefügten Verbindungsmitteln (**324**) eine arretierte Endstellung bilden.

6. Filtersystem nach zumindest einem der Ansprüche 4 oder 5, **dadurch gekennzeichnet, dass** der Flansch (**32**) hervorstehende Federelemente (**320**) hat, welche erst im eingedrückten Zustand das Lösen der Verbindungsmittel (**324**) von den zweiten Andockmitteln (**234**) aus der arretierten Endstellung ermöglichen.

7. Filtersystem nach zumindest einem der Ansprüche 1 bis 6, **dadurch gekennzeichnet, dass** die Stellmechanik (**29**) sich axial durch die Filtereinheit (**2**) erstreckt und sich zusammensetzt aus:
a) einem Spindelstab (**28**), welcher mit einem Ende am tellerförmigen Verschlusselement (**27**) fixiert ist und dessen anderes Ende als Gewindeabschnitt (**280**), vorzugsweise mit Aussengewinde, ausgebildet ist;
b) der Spindelhülse (**21**), vorzugsweise mit Innengewinde, welche mit dem Gewindeabschnitt (**280**) in Eingriff ist; und
c) dem an der Spindelhülse (**21**) sitzenden Schlussstück (**24**).

8. Filtersystem nach zumindest einem der Ansprüche 1 bis 7, **dadurch gekennzeichnet, dass** die Filtereinheit (**2**) im Prinzip zylindrisch ist und sich zusammensetzt aus:
a) einem Filtereinsatz (**20**) von hohlzylindrischer Gestalt mit einem hohlen Innenraum (**202**) und beidseits je einer Stirnfläche (**200**);
b) einem Mantel (**201**), der den Filtereinsatz (**20**) an seinem Aussenumfang umhüllt;
c) einer erster Seitenabdeckung (**25**), welche einer der Stirnflächen (**200**) zugeordnet ist und den zentrischen Eintritt (**203**) umrandet;
d) dem Verschlusselement (**27**) mit der daran fixierten und sich axial durch den Innenraum (**202**) erstreckenden Stellmechanik (**29**); und
e) einer zweiten Seitenabdeckung (**23**), welche der anderen Stirnfläche (**200**) zugeordnet ist, einen zum Innenraum (**202**) gewölbten zentrischen Boden (**231**) hat, wodurch sich eine nach aussen mündende Vertiefung (**235**) ergibt, in die von der Stellmechanik (**29**) das Schlussstück (**24**) hineinragt.

9. Filtersystem nach Anspruch 8, **dadurch gekennzeichnet, dass**
a) die ersten Andockmittel (**253**) an der ersten Seitenabdeckung (**25**), am Rand des Eintritts (**203**), angeordnet sind;
b) die zweiten Andockmittel (**234**) an der zweiten Seitenabdeckung (**23**), in die Vertiefung (**235**) ragend, angeordnet sind; und
c) der Aufnahmeport (**17**) einen Zugang (**170**) in das Containment (**1**) besitzt, und am Rand des Zugangs (**170**) Anschlussorgane (**171**) zum Eingriff mit den ersten Andockmitteln (**253**) vorhanden sind.

10. Filtersystem nach zumindest einem der Ansprüche 1 bis 9, **dadurch gekennzeichnet, dass** eine Steuereinheit vorgesehen ist, welche dazu dient:
a) An- und Abschaltzeiten, Aktivierungsdauer, Drehrichtung und Drehgeschwindigkeit des Elektromotors (3**3**) der Antriebseinheit (**3**) und damit indirekt die Stellung des Verschlusselements (2**7**) programmmässig zu schalten und optional auch zu protokollieren;
b) die Bewegung des Verschlusselements (**27**) in den Endstellungen bei maximaler Öffnung und bei ordnungsgemässer Absperrung des Eintritts (**203**) in die Filtereinheit (**2**) zu begrenzen; und
c) die jeweils momentane Stellung des Verschlusselements (**27**) anzuzeigen und optional auch zu protokollieren.

11. Filtersystem nach zumindest einem der Ansprüche 1 bis 10, **dadurch gekennzeichnet, dass**
a) eine Vielzahl von Filtersystemen, jeweils aus einer Filtereinheit (**2**) und einer damit verbundenen Antriebseinheit (**3**) bestehend, an einem Containment (**1**) angebracht ist; und
b) die Steuereinheit für die Funktion jedes Filtersystems innerhalb der Gesamtheit aller Filtersysteme individuell programmierbar ist.

12. Filtersystem nach zumindest einem der Ansprüche 1 bis 11, **dadurch gekennzeichnet, dass** die Stellmechanik (2**9**) alternativ zur mit der Filtereinheit (**2**) verbindbaren Antriebseinheit (**3**) manuell betätigbar ist.

## Claims

1. A filter system for a containment (**1**) passed through by a gas stream, having at least one filter unit (**2**), wherein:
a) the filter unit (**2**) has:
aa) first docking means (**253**), which are designed for the releasable connection of the filter unit (**2**) to a receiving port (**17**) of the containment (**1**); and
ab) a closure element (**27**), which is adjustable by means of an adjusting mechanism (**29**), for the shutting off and opening of an inlet (**203**) into the filter unit (**2**);
b) for operating the adjusting mechanism (**29**) provision is made for a drive unit (**3**) which can be connected to this, the drive unit (**3**) comprises an electric motor (**33**) for driving a rotatably mounted transmission part (**30**) and an adapter assembly (**39**), connected to the transmission part (**30**), which is provided for connecting to the adjusting mechanism (**29**), **characterized in that**
c) the electric motor (**33**) has a drive gear (**330**);
d) the transmission part (**30**) is designed as a wheel which is driven by the drive gear (**330**);
e) the transmission ratio from the drive gear (**330**) of the electric motor (**33**) to the transmission part (**30**) is dimensioned to be higher than 1:20, preferably higher than 1:30, e.g. 1:33; and
f) the adapter assembly (**39**) has a driver (**38**) which has a rotational connection to the transmission part (**30**) and is designed to engage with the adjusting mechanism (**29**).

2. The filter system as claimed in claim 1, **characterized in that**
a) the drive gear (**330**) is a pinion with a radially encompassing toothing arrangement; and
b) the transmission part (**30**) has a radially encompassing toothing arrangement (**300**) which engages with the toothing arrangement of the drive gear (**330**).

3. The filter system as claimed in at least one of claims 1 or 2, **characterized in that**
a) the adjusting mechanism (**29**) of the filter unit (**2**) on one side has an end piece (**24**), with a non-round contour, which is seated on a spindle sleeve (**21**), wherein the end piece (**24**) is for example an externally multi-faceted nut; and
b) the driver (**38**) of the adapter assembly (**39**) has a complementary geometry for the form fit with the contour of the end piece (**24**), wherein the driver (**38**) is for example internally multi-faceted and encompasses the external multifaceting of the nut.

4. The filter system as claimed in at least one of claims 1 to 3, **characterized in that** the adapter assembly (**39**) further comprises:
a) for the connection between the adjusting mechanism (**29**) of the filter unit (**2**) and the drive unit (**3**) connecting means (**324**) provided at the drive unit (**3**) and designed complementary to the second docking means (**234**) existing at the filter unit (**2**); and
b) a fixed flange (**32**) as a support base for the driver (**38**) and a holder (**31**) for the fastening of the electric motor (**33**).

5. The filter system as claimed in claim 4, **characterized in that**
a) the connecting means (**324**), on the drive unit (**3**) side, are arranged on the flange (**32**) and have the form of grooves with an undercut;
b) the second docking means (**234**) on the filter unit (**2**) has the form of locking lugs; and
c) the second docking means (**234**), together with the coupled connecting means (3**2**4), form a locked end position.

6. The filter system as claimed in at least one of claims 4 or 5, **characterized in that** the flange (**32**) has projecting spring elements (**320**), which, only in the pressed in state, enable the release of the connecting means (**324**) from the second docking means (**234**) from the locked end position.

7. The filter system as claimed in at least one of claims 1 to 6, **characterized in that** the adjusting mechanism (**29**) extends axially through the filter unit (**2**) and consists of:
a) a spindle rod (**28**), which by one end is fixed on the plate-like closure element (**27**) and the other end of which is designed as a threaded section (**280**), preferably with a male thread;
b) the spindle sleeve (**21**), preferably with a female thread, which engages with the male threaded section (**280**); and
c) the end piece (**24**) which is seated on the spindle sleeve (**21**).

8. The filter system as claimed in at least one of claims 1 to 7, **characterized in that** the filter unit (**2**) is cylindrical in principle and consists of:
a) a filter insert (**20**) of hollow cylindrical design with a hollow interior space (**202**) and an end face (**200**) on both sides;
b) a casing (**201**), which encloses the filter insert (**20**) by its outer circumference;
c) a first side cover (**25**), which is associated with one of the end faces (**200**) and encircles the central inlet (**203**);
d) the closure element (**27**) with the adjusting mechanism (**29**) which is fixed thereon and extends axially through the interior space (**202**); and
e) a second side cover (**23**), which is associated with the other end face (**200**), and has a central base (**231**) which is curved toward the interior space (**202**), as result of which an outwardly opening recess (**235**) is created, into which recess the end piece (**24**) projects from the adjusting mechanism (**29**).

9. The filter system as claimed in claim 8, **characterized in that**
a) the first docking means (**253**) are arranged on the first side cover (**25**), at the edge of the inlet (**203**);
b) the second docking means (**234**) are arranged on the second side cover (**23**), projecting into the recess (**235**); and
c) the receiving port (**17**) has an access (**170**) into the containment (**1**), and connecting elements (**171**), for engaging with the first docking means (**253**), are provided at the edge of the access (**170**).

10. The filter system as claimed in at least one of claims 1 to 9, **characterized in that** provision is made for a control unit which serves for the purpose of:
a) controlling according to program, and optionally also logging, switching on and switching off times, activation duration, rotational direction and rotational speed of the electric motor (**33**) of the drive unit (**3**) and therefore indirectly the position of the closure element (**27**);
b) limiting the movement of the closure element (**27**) in the end positions during maximum opening and during correct shutting off of the inlet (**203**) into the filter unit (**2**); and
c) indicating, and optionally also logging, the respectively current position of the closure element (**27**).

11. The filter system as claimed in at least one of claims 1 to 10, **characterized in that**
a) a multiplicity of filter systems, each consisting of filter unit (**2**) and a drive unit (**3**) connected thereto, are attached to a containment (**1**); and
b) the control unit can be individually programmed for the function of each filter system within the sum total of all the filter systems.

12. The filter system as claimed in at least one of claims 1 to 11, **characterized in that** the adjusting mechanism (**29**) can be manually operated alternatively to the drive unit (**3**) which can be connected to the filter unit (**2**).

## Revendications

1. Système de filtration qui est destiné à une enceinte (**1**) traversée par un gaz et qui comprend au moins une unité de filtration (**2**):
a) l'unité de filtration (**2**) comprenant:
aa) des premiers moyens d'emboîtement (**253**) destinés à raccorder de manière amovible l'unité de filtration (**2**) à un port de réception (**17**) de l'enceinte (**1**); et
ab) un élément de fermeture (**27**) qui peut être réglé au moyen d'un mécanisme de réglage (**29**) et qui est destiné à fermer et ouvrir une entrée (**203**) de l'unité de filtration (**2**);
b) une unité d'entraînement (**3**) étant prévue pour actionner le mécanisme de réglage (**29**), laquelle peut être reliée à celui-ci et comprend un moteur électrique (**33**) destiné à entraîner une partie de transmission (**30**) montée à rotation et un ensemble adaptateur (**39**) relié à la partie de transmission (**30**) et destiné à être relié au mécanisme de réglage (**29**), **caractérisé en ce que**
c) le moteur électrique (**33**) comporte une roue motrice (**330**);
d) la partie de transmission (**30**) est conçue comme une roue entraînée par la roue motrice (**330**);
e) le rapport de transmission de la roue motrice (**330**) du moteur électrique (**33**) à la partie de transmission (**30**) est supérieur à 1:20, de préférence supérieur à 1:30, par exemple est 1:33; et
f) l'ensemble adaptateur (**39**) comporte un mécanisme d'entraînement (**38**) qui est relié de manière rotative à la partie de transmission (**30**) et qui est destiné à venir en engagement avec le mécanisme de réglage (**29**).

2. Système de filtration selon la revendication 1, **caractérisé en ce que**
a) la roue motrice (**330**) est un pignon pourvu d'une denture radialement périphérique; et
b) la partie de transmission (**30**) comporte une denture (**300**) radialement périphérique qui est en engrènement avec la denture de la roue motrice (**330**).

3. Système de filtration selon l'une au moins des revendications 1 ou 2, **caractérisé en ce que**
a) le mécanisme de réglage (**29**) de l'unité de filtration (**2**) comporte d'une part une pièce de fermeture (**24**) siégeant au niveau d'un manchon de broche (**21**) et présentant un contour non circulaire, la pièce de fermeture (**24**) étant par exemple un écrou pourvu un polygone mâle; et
b) le mécanisme d'entraînement (**38**) de l'ensemble adaptateur (**39**) a une géométrie complémentaire permettant d'établir une liaison par complémentarité de formes avec le contour de la pièce de fermeture (**24**), le mécanisme d'entraînement (**38**) étant par exemple un polygone femelle s'engageant autour du polygone mâle.

4. Système de filtration selon l'une au moins des revendications 1 à 3, **caractérisé en ce que** l'ensemble adaptateur (**39**) comprend en outre:
a) des moyens de liaison (**324**) qui sont destinés à relier le mécanisme de réglage (**29**) à l'unité d'entraînement (**3**), qui sont prévus au niveau de l'unité d'entraînement (**3**) et qui sont conçus pour être complémentaires de deuxièmes moyens d'emboîtement (**234**) disposés au niveau de l'unité de filtration (**2**); et
b) une bride fixe (**32**) servant de base de support au mécanisme d'entraînement (**38**) et un support (**31**) destiné à fixer le moteur électrique (**33**).

5. Système de filtration selon la revendication 4, **caractérisé en ce que**
a) les moyens de liaison (**324**) sont disposés du côté de l'unité d'entraînement (**3**) au niveau de la bride (**32**) et ont la forme de gorges pourvues de contre-dépouille;
b) les deuxièmes moyens d'emboîtement (**234**) ont au niveau de l'unité de filtration (**2**) la forme d'ergots d'encliquetage; et
c) les deuxièmes moyens d'emboîtement (**234**) forment conjointement avec les moyens de liaison assemblés (**324**) une position d'extrémité verrouillée.

6. Système de filtration selon l'une au moins des revendications 4 ou 5, **caractérisé en ce que** la bride (**32**) comporte des éléments à ressort saillants (**320**) qui permettent, uniquement à l'état enfoncé, la libération des moyens de liaison (**324**) des deuxièmes moyens d'emboîtement (**234**) de la position d'extrémité verrouillée.

7. Système de filtration selon l'une au moins des revendications 1 à 6, **caractérisé en ce que** le mécanisme de réglage (**29**) s'étend axialement à travers l'unité de filtration (**2**) et comprend:
a) une tige de broche (**28**) qui est fixée, à une extrémité, à l'élément de fermeture (**27**) en forme de plaque et dont l'autre extrémité est conçue comme une partie filetée (**280**), pourvue de préférence d'un filetage extérieur;
b) le manchon de broche (**21**), pourvu de préférence d'un filetage intérieur, qui est en engrènement avec la partie filetée (**280**); et
c) la pièce de fermeture (**24**) siégeant au niveau du manchon de broche (**21**).

8. Système de filtration selon l'une au moins des revendications 1 à 7, **caractérisé en ce que** l'unité de filtration (**2**) est en principe cylindrique et comprend:
a) un insert filtrant (**20**) de forme cylindrique creuse comportant un espace intérieur creux (**202**) et des deux côtés une face d'extrémité (**200**);
b) une chemise (**201**) qui entoure l'insert filtrant (**20**) au niveau de sa périphérie extérieure;
c) un premier couvercle latéral (**25**) qui est associé à l'une des faces d'extrémité (**200**) et qui entoure l'entrée centrale (**203**);
d) l'élément de fermeture (**27**) comprenant le mécanisme de réglage (**29**) qui est fixé à celui-ci et qui s'étend axialement à travers l'espace intérieur (**202**); et
e) un deuxième couvercle latéral (**23**) qui est associé à l'autre face d'extrémité (**200**), qui comporte un fond central (**231**) incurvé vers l'espace intérieur (**202**), de manière à obtenir un évidement (**235**) qui débouche vers l'extérieur et dans lequel la pièce de fermeture (**24**) fait saillie du mécanisme de réglage (**29**).

9. Système de filtration selon la revendication 8, **caractérisé en ce que**
a) les premiers moyens d'emboîtement (**253**) sont disposés au niveau du premier couvercle latéral (**25**), au niveau du bord de l'entrée (**203**);
b) les deuxièmes moyens d'emboîtement (**234**) sont disposés au niveau du deuxième couvercle latéral (**23**) en faisant saillie dans l'évidement (**235**); et
c) le port de réception (**17**) comporte un accès (**170**) menant dans l'enceinte (**1**) et des éléments de raccordement (**171**) destinés à s'engager avec les premiers moyens d'emboîtement (**253**) sont présents au niveau du bord de l'accès (**170**).

10. Système de filtration selon l'une au moins des revendications 1 à 9, **caractérisé en ce qu'**une unité de commande est prévu qui sert à:
a) commuter par programmation et éventuellement également consigner des temps d'activation et de désactivation, une durée d'activation, un sens de rotation et une vitesse de rotation du moteur électrique (**33**) de l'unité d'entraînement (**3**) et donc indirectement la position de l'élément de fermeture (2**7**);
b) limiter le mouvement de l'élément de fermeture (**27**) dans les positions finales en cas d'ouverture maximale et en cas de blocage approprié de l'entrée (**203**) menant dans l'unité de filtration (**2**); et
c) afficher et éventuellement également consigner la position actuelle respective de l'élément de fermeture (**27**).

11. Système de filtration selon l'une au moins des revendications 1 à 10, **caractérisé en ce que**
a) une pluralité de systèmes de filtration, comprenant chacun une unité de filtration (**2**) et une unité d'entraînement (**3**) reliée à celle-ci, sont montés au niveau d'une enceinte (**1**); et
b) l'unité de commande de la fonction de chaque système de filtration est programmable individuellement dans la totalité des systèmes de filtration.

12. Système de filtration selon l'une au moins des revendications 1 à 11, **caractérisé en ce que** le mécanisme de réglage (**29**) peut être actionné manuellement à la place de l'unité d'entraînement (**3**) pouvant être raccordée à l'unité de filtration (**2**).
